# EUROPÄISCHE PATENTSCHRIFT

(11) **EP 3 377 784 B1**
(45) Veröffentlichungstag und Bekanntmachung des Hinweises auf die Patenterteilung: **29.04.2020**
(21) Anmeldenummer: 16784518.9
(22) Anmeldetag: 21.10.2016
(51) Int. Cl.: F16F 15/14

(54) **DÄMPFUNGSANORDNUNG FÜR WENIGSTENS EINE TILGERMASSE**
DAMPING ARRANGEMENT FOR AT LEAST ONE ABSORPTION MASS
ENSEMBLE D'AMORTISSEMENT POUR AU MOINS UNE MASSE D'AMORTISSEMENT

(30) Priorität: 19.11.2015 DE 102015222822
(43) Veröffentlichungstag der Anmeldung: 26.09.2018
(73) Patentinhaber: ZF Friedrichshafen AG, 88046 Friedrichshafen (DE)
(72) Erfinder: FAUSS, Christoph, 97440 Werneck (DE); KNAUS, Nikolaj, 97424 Schweinfurt (DE); FISCHER, Reinhold, 96528 Frankenblick (DE); SCHIERLING, Bernhard, 97273 Kürnach (DE)
(74) Vertreter: ZF Friedrichshafen AG
(86) Internationale Anmeldenummer: PCT/EP2016/075333
(87) Internationale Veröffentlichungsnummer: WO 2017/084829

(56) Entgegenhaltungen:
- WO-A1-2013/156733
- DE-A1-102012 217 958

## Beschreibung

Die vorliegende Erfindung betrifft eine Dämpfungsanordnung für wenigstens eine an einem Tilgermassenträger aufgenommene Tilgermasse eines Tilgersystems mit einer der wenigstens einen Tilgermasse zugeordneten Dämpfungseinrichtung, die sowohl in Radialrichtung als auch in Umfangsrichtung eine Wirkung als Anschlag entfaltet, wobei die Dämpfungseinrichtung über zumindest ein Dämpferelement verfügt, das dem Tilgermassenträger zumindest entlang eines Teils von dessen Umfangserstreckung zugeordnet ist.

Eine derartige Dämpfungsanordnung ist aus der DE 10 2012 217 958 A1 bekannt. Die dort verwendeten Tilgermassen verfügen jeweils zwischen zwei mit Axialversatz zueinander angeordneten Tilgermassenteilen über einen Tilgermassenmittelteil, welcher in formschlüssiger Verbindung mit der Dämpfungseinrichtung steht, und von dieser an seinen dem Tilgermassenträger zugewandten Seiten umschlossen ist. Die Dämpfungseinrichtung soll beim Auftreffen des Tilgermassenmittelteils auf einen Anschlag, welcher der jeweiligen Auslenkrichtung der Tilgermasse aus ihrer Ausgangsposition zugeordnet ist, verhindern, dass ein direktes metallisches Auftreffen des Tilgermassenmittelteils gegenüber dem Tilgermassenträger zustande kommt.

Da die Dämpfungseinrichtung an den Tilgermassen aufgenommen ist, können dieselben, da der für die Tilgermassen vorgesehene Bauraum sowohl in Radialrichtung, insbesondere aber in Umfangsrichtung, begrenzt ist, in den vorgenannten Richtungen nur deutlich kleiner ausgebildet sein, als dies ohne eine derartige Dämpfungseinrichtung der Fall wäre. Dadurch bleibt dann, wenn die Tilgermassen mit möglichst großem Gewicht ausgebildet sein sollen, deren Trägheitswirkung eingeschränkt.

Eine vergleichbare Dämpfungsanordnung geht aus der DE 10 2012 214 214 A1 hervor. Dort ist dem Tilgermassenträger eine ringförmige Dämpfungseinrichtung zugeordnet, die mit Dämpferelementen in Form von Radialvorsprüngen versehen ist. Die für einen Kontakt mit den Tilgermassen vorgesehenen Kontaktflächen der Dämpfungseinrichtung können zumindest partiell mit einer Kunststoff- oder Elastomerbeschichtung ausgebildet sein. Aufgrund der Ausbildung der Dämpferelemente in Form von Radialvorsprüngen verbraucht die Dämpfungseinrichtung erheblichen Bauraum, und kann, bei Ausbildung aus Metall, die Masse der Dämpfungsanordnung beträchtlich erhöhen.

WO 2013/156733 A1 lehrt eine Pendeldämpfungsvorrichtung für ein Kraftfahrzeuggetriebe, wobei die Vorrichtung mindestens eine Pendelmasse aufweist, deren Mittelteil auf einem umschwenkbaren Träger beweglich gelagert ist.
DE 10 2012 217 958 A1 lehrt Fliehkraftpendel, welches ein um eine Drehachse drehendes Flanschteil und axial beidseitig an diesem begrenzt gegenüber diesem aufgenommene Pendelmassen enthält, wobei jeweils zwei sich axial gegenüberliegende Pendelmassen zu einem Pendelmassenpaar miteinander verbunden sind.

Der Erfindung liegt die Aufgabe zugrunde, eine Dämpfungseinrichtung für wenigstens eine an einem Tilgermassenträger aufgenommene Tilgermasse eines Tilgersystems so auszubilden, dass die bestmögliche Anschlagdämpfung bereitgestellt werden kann, ohne hierdurch Gewichtsnachteile für die Dämpfungsanordnung und/oder Trägheitsnachteile für die Tilgermassen akzeptieren zu müssen.

Gemäß dem wesentlichen Aspekt der Erfindung wird diese Aufgabe gelöst durch eine Dämpfungsanordnung für wenigstens eine an einem Tilgermassenträger aufgenommene Tilgermasse eines Tilgersystems mit einer der wenigstens einen Tilgermasse zugeordneten Dämpfungseinrichtung, die sowohl in Radialrichtung als auch in Umfangsrichtung eine Wirkung als Anschlag für die jeweilige Tilgermasse entfaltet, wobei die Dämpfungseinrichtung über zumindest ein Dämpferelement verfügt, das dem Tilgermassenträger zumindest entlang eines Teils von dessen Umfangserstreckung zugeordnet ist.

Von besonderer Bedeutung ist hierbei, dass das Dämpferelement der Dämpfungseinrichtung über einen Dämpferelemententräger verfügt, der am Tilgermassenträger in einer hierfür vorgesehenen Aussparung des Tilgermassenträgers aufgenommen ist, und zur Aufnahme einer Dämpferelementenauflage dient, die mit einem als Anschlag für die jeweilige Tilgermasse wirksamen Radialvorsprung in den im Tilgermassenträger für die Bewegung der jeweiligen Tilgermasse vorgesehenen Bauraum ragt.

Aufgrund dieser Aufnahme des Dämpferelementes am Tilgermassenträger kann das Dämpferelement seine Funktion erfüllen, ohne eine Begrenzung der zugeordneten Tilgermasse in deren Abmessungen und damit bezüglich deren Gewichtes zu erzwingen.

Von besonderer Bedeutung ist die Ausbildung des Dämpferelementes mit zwei Komponenten, von denen ein Dämpferelemententräger als erste Komponente aus einem zumindest im Wesentlichen formstabilen Werkstoff besteht, und eine an dem Dämpferelemententräger aufgenommene Dämpferelementenauflage als zweite Komponente aus einem zumindest im Wesentlichen verformbaren Werkstoff. Der Dämpferelemententräger als erste Komponente kann zur Gewährleistung der gewünschten Verformungsstabilität zwar aus Stahl bestehen, jedoch bringt die Ausbildung dieser ersten Komponente aus formstabilem Kunststoff Vorteile insbesondere gegenüber der Tilgermasse, wie beispielsweise beim Reib- oder Verschleißverhalten. Bei Verwendung einer Dämpferelementenauflage aus einem Kunststoff, der gegenüber dem Kunststoff des Dämpferelemententrägers besser verformbar ist, oder aus einem Elastomer, wird die von der zweiten Komponente gewünschte Nachgiebigkeit erbracht, so dass bei einem Kontakt des Dämpferelemententrägers mit der Tilgermasse dieselbe jeweils weich und damit geräuscharm zum Stillstand gebracht werden kann. Bei Ausbildung beider Komponenten des Dämpferelementes, als von Dämpferelemententräger und von Dämpferelementenauflage, aus Kunststoff sind beide Komponenten mit Vorzug aus Spritzguss hergestellt, wodurch sich Fertigungsvorteile ergeben. Insbesondere kann hierbei die zweite Komponente durch Aufspritzen auf die erste Komponente mit geringem Fertigungsaufwand mit der ersten Komponente fest verbunden werden. Mit besonderem Vorteil ist die erste Komponente hierfür an ihrer der zweiten Komponente zugewandten Seite mit einer geometrischen Profilierung ausgebildet, wobei sich beim Aufspritzen der zweiten Komponente eine Gegenprofilierung ausbildet, die mit der Profilierung der ersten Komponente in formschlüssiger Verbindung steht. Selbstverständlich ist eine solche formschlüssige Verbindung aber auch dann vorteilhaft, wenn als zweite Komponente ein Elastomer Verwendung findet. In diesem Fall ist auch der Elastomer an seiner der ersten Komponente zugewandten Seite mit einer zur Profilierung der ersten Komponente passenden Gegenprofilierung versehen.

Darüber hinaus kann dem Dämpferelemententräger und damit der ersten Komponente eine Axialsicherung zugeordnet sein. Diese kann unmittelbar am Dämpferelemententräger vorgesehen sein, oder aber an einem zum Dämpferelemententräger axial benachbarten Bauteil. Mit Vorzug wird eine am Dämpferelemententräger vorgesehene Axialsicherung mit einer Axialsicherung kombiniert, die an einem zum Dämpferelemententräger axial benachbarten Bauteil vorgesehen ist, da sich hierdurch die Möglichkeit ergibt, den Dämpferelemententräger in einer ersten Axialrichtung in die hierfür bestimmte Aussparung des Tilgermassenträgers bis zum Erreichen der ersten Axialsicherung einzuschieben, um den Dämpferelemententräger anschließend durch Einlegen des entsprechenden, axial benachbarten Bauteils gegen eine Rückbewegung zumindest im Wesentlichen zu sichern. Das benachbarte Bauteil wirkt dann, sobald es seine gewünschte Relativposition gegenüber dem Dämpferelemententräger erreicht hat, als zweite Axialsicherung.

Das Dämpferelement verfügt an seiner dem Tilgermassenträger zugewandten Seite über wenigstens einen Dämpferelementenarm , welcher in einen entsprechenden Aussparungsabschnitt der Aussparung des Tilgermassenträgers eingreift. Insbesondere dann, wenn der wenigstens eine Dämpferelementenarm des Dämpferelementes an einem freien Ende eine Querschnittsaufweitung aufweist, welche in eine entsprechende Aussparungsaufweitung des Aussparungsabschnittes eingreift, ergibt sich eine formschlüssige Anbindung des Dämpferelementes an den Tilgermassenträger, so dass das Dämpferelement auch unter Fliehkrafteinfluss sicher im Tilgermassenträger gehalten ist. Um besonders gut gegen Fliehkrafteinfluss gesichert zu sein, ist es sinnvoll, wenn der zumindest eine Dämpferelementenarm am Dämpferelement zumindest eine Erstreckungskomponente in Radialrichtung und damit in Wirkrichtung der Fliehkraft aufweist.

Mit Vorzug verfügt das Dämpferelement an seiner der jeweiligen Tilgermasse zugewandten Seite in einem Umfangsbereich, welcher ungeachtet von der jeweiligen Auslenkposition der Tilgermasse unterbrechungsfrei von derselben zumindest überdeckt ist, über einen Radialvorsprung, der in Zuordnung zu einer Radialauswölbung an einem Tilgermassenteil der Tilgermasse wirksam ist. Eine geschickte Gestaltung dieses Radialvorsprunges bewirkt hierbei, dass der Radialvorsprung in Bezug auf die zugeordnete Tilgermasse dann, wenn die Tilgermasse eines in Radialrichtung wirksamen Anschlags bedarf, diese Anschlagfunktion wahrnehmen kann, und andererseits, wenn die Tilgermasse eine Bewegung vollzieht, in welcher sie diese Funktion des Radialvorsprunges nicht benötigt, keinen Kontakt mit dem Radialvorsprung erfährt, und somit ihre Bewegung frei von formschlüssiger Behinderung vollziehen kann. Der letztgenannte Zustand wird insbesondere bei Betrieb der Tilgermassen mit einer Drehzahl erfolgen, bei welcher die Fliehkraft die Gewichtskraft übersteigt, während der Radialvorsprung beispielsweise bei sehr geringer Drehzahl, wenn die Fliehkraft die Gewichtskraft unterfällt, seine Anschlagfunktion wahrnimmt. Da die jeweilige Tilgermasse bei der letztgenannten Betriebsweise aus beiden möglichen Auslenkungsrichtungen in Kontakt mit dem Radialvorsprung gelangen kann, wird ein Verschleiß, sofern ein solcher überhaupt ausgelöst wird, gleichmäßig erfolgen.

Durch Ausbildung des Dämpferelementes in seinen jeweiligen umfangsseitigen Endbereichen mit jeweils in Richtung zum zugeordneten Tilgermassenteil der entsprechenden Tilgermasse überstehenden Radialvorsprüngen entstehen jeweils in Umfangsrichtung wirksame Anschläge, die mit dem zugeordneten Tilgermassenteil der entsprechenden Tilgermasse zusammenwirken. Diese jeweils in Umfangsrichtung wirksamen Anschläge sind, in Umfangsrichtung gesehen, beidseits des in Radialrichtung wirksamen Anschlags vorgesehen.

Die Erfindung wird nachfolgend anhand der beiliegenden Figuren detailliert beschrieben. Es zeigt:
Fig. 1 Eine Draufsicht auf ein Tilgersystem mit einem durch eine Nabenscheibe gebildeten Tilgermassenträger und mit Tilgermassen;
Fig. 2 eine Schnittdarstellung des Tilgersystems der Fig. 1 gemäß der Schnittlinie B - B;
Fig. 3 eine vergrößerte Herauszeichnung des in Fig. 2 eingekreisten Bereichs Z;
Fig. 4 eine Herauszeichnung eines Segments der in Fig. 1 gezeigten Nabenscheibe mit einem Dämpferelement;
Fig. 5 eine Schnittdarstellung der Nabenscheibe der Fig. 4 gemäß der Schnittlinie A - A durch das Dämpferelement;
Fig. 6 eine vergrößerte Herauszeichnung des Dämpferelements gemäß des in Fig. 5 eingekreisten Bereichs Z;
Fig. 7 einen Teilschnitt durch das aus Fig. 4 als Einzelheit entnommene Dämpferelement mit Dämpferelemententräger und Dämpferelementenauflage;
Fig. 8 eine Schnittdarstellung des Dämpferelements der Fig. 7 gemäß der Schnittlinie B - B;
Fig. 9a eine Darstellung des Dämpferelemententrägers;
Fig. 9b eine Darstellung der Dämpferelementenauflage.

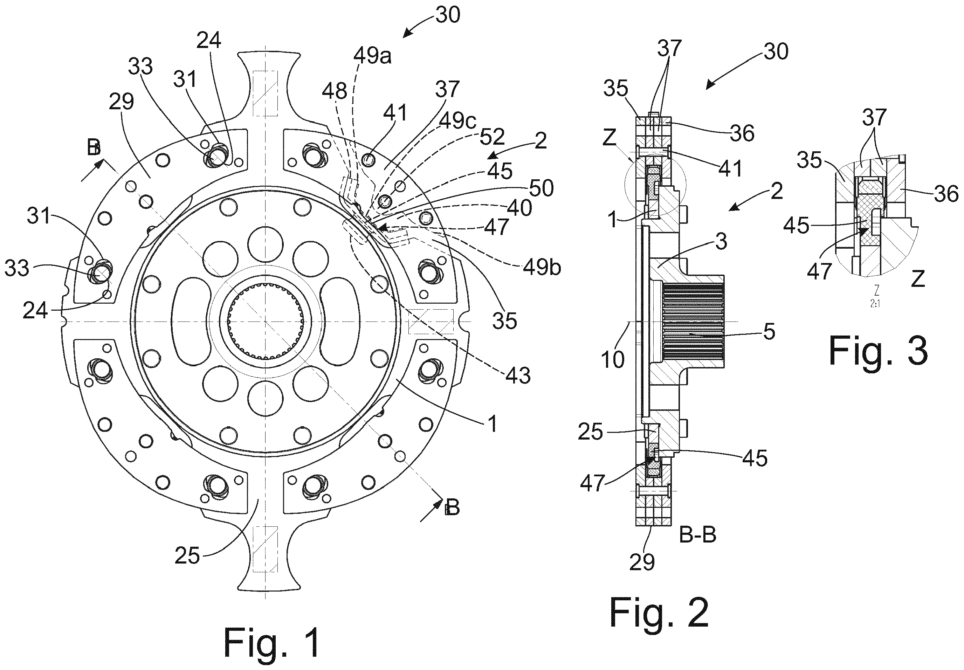

Fig. 1 und 2 zeigen ein Tilgersystem 30 mit einem um eine Zentralachse 10 drehbaren Tilgermassenträger 25 und mit einer Mehrzahl von am Tilgermassenträger 25 aufgenommenen Tilgermassen 29. Der Tilgermassenträger 25 wird durch eine Nabenscheibe 1 gebildet, die an einer Nabe 3 zentriert und befestigt ist. Die Nabe 3 verfügt über eine Innenverzahnung 5 zur Übertragung eines anliegenden Drehmomentes auf einen nicht gezeigten Abtrieb, wie beispielsweise eine Getriebeeingangswelle.

Das Tilgersystem 30 und damit auch die Nabenscheibe 1 sind Teil einer Dämpfungsanordnung 2, beispielsweise in Form eines bekannten und daher nicht gezeigten Torsionsschwingungsdämpfers. Da die Nabenscheibe 1 als Tilgermassenträger 25 ausgebildet ist, weist diese, wie Fig. 3 in Darstellung ohne Tilgermassen zeigt, erste Führungsbahnen 27 auf, während in den Tilgermassen 29 zweite Führungsbahnen 31 vorgesehen sind. Die Führungsbahnen 27 in dem Tilgermassenträger 25 sind mit den Führungsbahnen 31 in den Tilgermassen 29 mittels jeweils eines walzenförmigen Koppelelementes 33 verbunden, das gegenüber beiden Führungsbahnen 27 und 31 relativ bewegbar ist, und idealerweise gegenüber diesen Führungsbahnen 27 und 31 abrollen soll.

Die Tilgermassen 29 bestehen in Achsrichtung jeweils aus mehreren Tilgermassenteilen 35, 36 und 37, von denen die beiden Tilgermassenteile 35 und 36, wie Fig. 2 zeigt, beidseits der Nabenscheibe 1 und damit des Tilgermassenträgers 25 angeordnet sind, während der dritte Tilgermassenteil 37 axial zwischen den beiden anderen Tilgermassenteilen 35 und 36 und gemäß Fig. 1, in einem Bauraum 40 des Tilgermassenträgers 25 aufgenommen ist. Die drei Tilgermassenteile 35 bis 37 sind mittels einer Vernietung 41 miteinander verbunden.

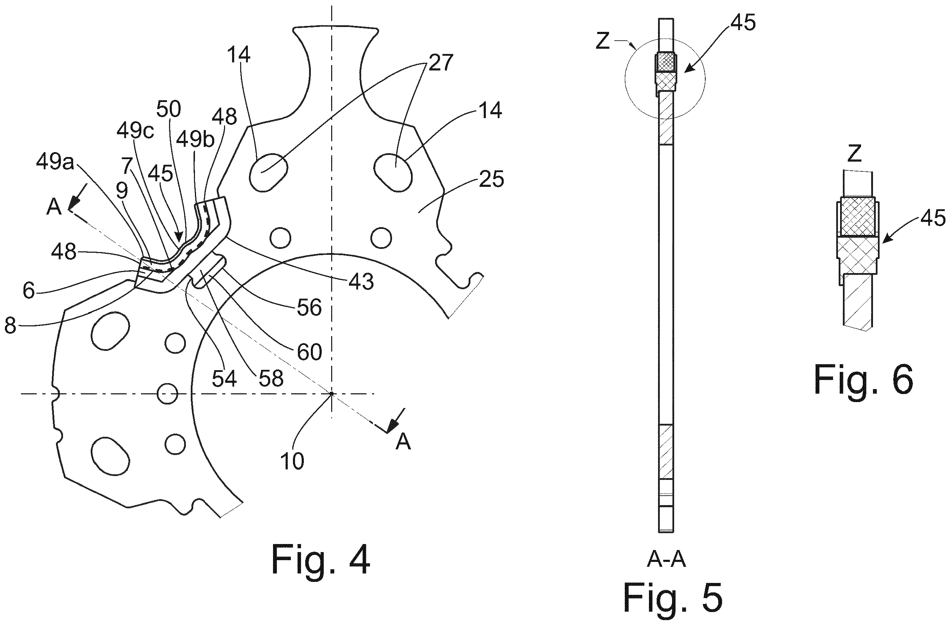

Radial innerhalb des axial mittleren Tilgermassenteils 37 ist eine Dämpfungseinrichtung 47 aufgenommen, die im vorliegenden Fall über ein einzelnes Dämpferelement 45 verfügt, ebenso aber auch mit einer Mehrzahl an Dämpferelementen ausgebildet sein kann. Das Dämpferelement 45 ist, wie Fig. 4 deutlicher zeigt, in einer Aussparung 43 des Tilgermassenträgers 25 aufgenommen. Das Dämpferelement 45 dient mit in Richtung zum axial mittleren Tilgermassenteil 37 (Fig. 1) überstehenden Radialvorsprüngen 48 im Sinne von in Umfangsrichtung wirksamen Anschlägen 49a und 49b für das axial mittlere Tilgermassenteil 37 und damit auch für die gesamte Tilgermasse 29. Ein Radialvorsprung 50 im Bereich des Dämpferelementes 45 in Umfangsrichtung zwischen den beiden Anschlägen 49a, 49b dient dagegen in Zuordnung zu einer Radialauswölbung 52 am Tilgermassenteil 37 an dessen dem Dämpferelement 45 zugewandter Seite als in Radialrichtung wirksamer Anschlag 49c.

Die das Dämpferelement 45 aufnehmende Aussparung 43 verfügt über einen Aussparungsabschnitt 54 (Fig. 4), der an seinem freien Ende über eine Aussparungsaufweitung 56 verfügen. Am Dämpferelement 45 ist ein Dämpferelementenarm 58 vorgesehen, der an seinem freien Ende eine Querschnittsaufweitung 60 inklusive einer Axialverlängerung 61 aufweist. Der Dämpferelementenarm 58 wird mittels einer Bewegung quer zu der in Fig. 4 gezeigten Erstreckungsrichtung des Dämpferelementes 45 in den Aussparungsabschnitt 54 eingeschoben, wodurch auch die Querschnittsaufweitung 60 in die Aussparungsaufweitung 56 eingebracht wird. Aufgrund ihrer speziellen Geometrie sichert die Aussparungsaufweitung 56 die Querschnittsaufweitung 60 gegen Fliehkräfte, und damit, über den Dämpferelementenarm 58, auch einen Dämpferelemententräger 6 des Dämpferelementes 45. Der Aussparungsabschnitt 54 verläuft, ebenso wie der darin aufgenommene Dämpferelementenarm 58 zumindest im Wesentlichen ausgerichtet auf die in Fig. 1 gezeigte Zentralachse 10. Der Zweck der genannten Axialverlängerung 61 am Dämpferelementenarm 58 besteht dagegen in einer großflächigen Radialabstützung des Dämpferelementenarmes 58 und damit des Dämpferelementes 45 in der Aussparung 43 des Tilgermassenträgers 25.

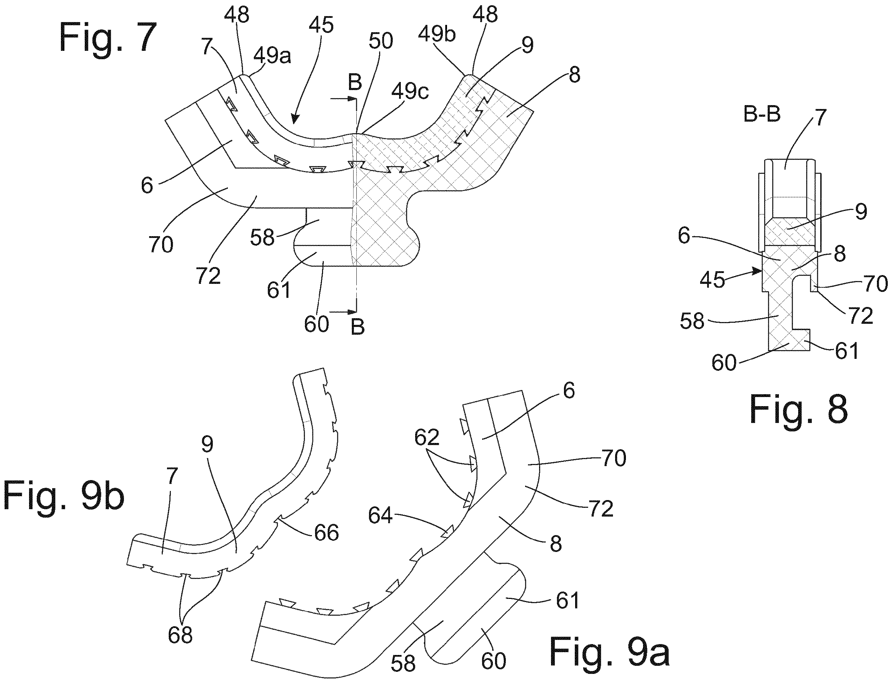

Der Dämpferelemententräger 6 des Dämpferelementes 45 dient zur Aufnahme einer Dämpferelementenauflage 7. Wie Fig. 9a und Fig. 9b in Zusammenschau mit Fig. 7 deutlich zeigt, ist der Dämpferelemententräger 6 hierfür an seiner der Dämpferelementenauflage 7 zugewandten Seite mit einer Profilierung 62 ausgebildet, die beispielsweise aus einer Mehrzahl einzelner mit Hinterschnitt ausgebildeten Stegen 64 besteht, die nahezu über die gesamte Breite des Dämpferelemententrägers 6 quer zu seiner in Fig. 9a gezeigten Erstreckungsrichtung verlaufen. Passend zu diesen Stegen 64 verfügt die Dämpferelementenauflage 7 über Nutungen 66, die eine Gegenprofilierung 68 zur Profilierung 62 bilden. Die Nutungen 66 verlaufen nahezu über die gesamte Breite der Dämpferelementenauflage 7 quer zu ihrer in Fig. 9b gezeigten Erstreckungsrichtung. Die Dämpferelementenauflage 7 ist aufgrund der Verbindung Profilierung 62/Gegenprofilierung 68 mittels einer Vielzahl an Stegen 64/Nutungen 66 sicher auf dem Dämpferelemententräger 6 gehalten. Damit sind Fliehkräfte auch dann für den Bestand des Dämpferelementes 45 unkritisch, wenn die Dämpferelementenauflage 7 besonders verformbar ausgebildet sein sollte.

Der Dämpferelemententräger 6 dient als zumindest im Wesentlichen formstabile erste Komponente 8 des Dämpferelementes 45, die Dämpferelementenauflage 7 dagegen als zumindest im Wesentlichen verformbare zweite Komponente 9 des Dämpferelementes 45.

Bei Verwendung eines Elastomers als Dämpferelementenauflage 7 sind die Nutungen 66 bereits vor einer Verbindung der Dämpferelementenauflage 7 mit dem Dämpferelemententräger 6 vorhanden, so dass durch eine Aufschiebebewegung senkrecht zu den in den Fig. 9a und 9b gezeigten Erstreckungsrichtungen eine Verbindung zwischen der Profilierung 62 und der Gegenprofilierung 68 hergestellt wird, indem die Stege 64 mit den Nutungen 66 in Eingriff gelangen. Sind dagegen beide Komponenten 8 und 9, also Dämpferelemententräger 6 und Dämpferelementenauflage 7, jeweils als Spritzgussteil auszuführen, dann bietet es sich an, dass die Komponente 9, also die Dämpferelementenauflage 7, auf die Komponente 8, also den Dämpferelemententräger 6, aufgespritzt wird, und sich dadurch die Verbindung zwischen der Profilierung 62 und der Gegenprofilierung 68 einstellt.

Eine weitere Besonderheit des Dämpferelemententrägers 6 ist insbesondere in Fig. 8 zu erkennen. Demnach ist an einem axialen Ende des Dämpferelemententrägers 6 eine Nase 70 angeformt, die den Dämpferelemententräger 6 gegen ein Herausfallen aus dem Tilgermassenträger 25 sichert, und damit als Axialsicherung 72 wirksam ist. Eine in Gegenrichtung wirksame weitere Axialsicherung 74 wird durch die in Fig. 2 gezeigte Nabe 3 der Nabenscheibe 1 gebildet. Somit ist das Dämpferelement 45, obwohl in den Tilgermassenträger 25 lediglich axial eingesteckt, verliersicher in der Aussparung 43 gehalten.

Am Tilgermassenträger 25 sind, ebenso wie an den Tilgermassen 29, jeweils paarweise, die Führungsbahnen 27, 31 vorgesehen, die jeweils über einen gekrümmten Verlauf verfügen. Die Führungsbahnen 27 am Tilgermassenträger 25 verfügen über je einen Ausgangsbereich 14 (Fig. 4), in welchem die jeweilige Führungsbahn 27 den größten Radialabstand von der Zentralachse 10 aufweist. Auch die an den Tilgermassen 29 vorgesehenen Führungsbahnen 31 verfügen über einen gekrümmten Verlauf, mit je einem Ausgangsbereich 24 (Fig. 1), in welchem die jeweilige Führungsbahn 31 den geringsten Radialabstand von der Zentralachse 10 aufweist. Der Zustand der Tilgermassen 29 bei Fahrbetrieb ist in Fig. 1 gezeigt, und liegt dann vor, wenn das Tilgersystem 30 mit einer Drehzahl betrieben wird, bei welcher die Fliehkraft die Gewichtskraft übersteigt.
Bei Fahrbetrieb können Torsionsschwingungen zwar Auslenkungen der Tilgermassen 29 aus deren Ausgangsposition 32 in Umfangsrichtung erzwingen, wodurch die Koppelelemente 33 aus den Ausgangsbereichen 14, 24 der Führungsbahnen 27, 31 ausgelenkt werden, jedoch erfolgt bei abklingender Torsionsschwingung unter der Wirkung der Fliehkraft stets eine Rückstellung der Koppelelemente 33 in die Ausgangsposition. Sollte der Eintrag von Torsionsschwingungen allerdings so stark sein, dass eine übermäßig starke Auslenkung der Tilgermassen 29 in Umfangsrichtung die Folge wäre, dann wird die Auslenkweite der Tilgermassen 29 dadurch begrenzt, dass die Radialauswölbung 52 am Tilgermassenteil 37 in Anlage an dem dieser Drehrichtung zugeordneten Anschlag 49a oder 49b gelangt ist. Da die Dämpferelementenauflage 7 des Dämpferelementes 45 mit Vorzug verformbar ausgebildet ist, wird dieser Kontakt weich und mit geringer Geräuschentwicklung erfolgen.

Es sind auch Betriebszustände denkbar, bei welchen die Tilgermassen 29 eine Verlagerung radial in Richtung zur Zentralachse erfahren, beispielsweise wenn beim Stillsetzen der Brennkraftmaschine das Tilgersystem 30 mit einer Drehzahl betrieben wird, bei welcher die Fliehkraft die Gewichtskraft unterfällt. In diesem Fall wird die Bewegung der Tilgermassen 29 begrenzt, indem die Radialauswölbung 52 am Tilgermassenteil 37 an der dieser Radialauswölbung 52 zugewandten Seite des Dämpferelementes 45 in Anlage gekommen ist, insbesondere hierbei an dessen Radialvorsprung 50. Auch mit dem Anschlag 49c erfolgt der Kontakt wegen der Ausbildung des Dämpferelementes 45 als Elastomer weich und mit geringer Geräuschentwicklung.

### Bezugszeichen

- 1: Nabenscheibe
- 2: Dämpfungsanordnung
- 3: Nabe
- 5: Innenverzahnung
- 6: Dämpferelemententräger
- 7: Dämpferelementenauflage
- 8: erste Komponente des Dämpferelementes
- 9: zweite Komponente des Dämpferelementes
- 10: Zentralachse
- 11: Antriebsflansch
- 13: Abdeckblech
- 14: Ausgangsbereich
- 15: Aufnahmeraum
- 17: Umfangsfedersatz
- 19: Gleitelemente
- 21: antriebsseitige Ansteuerelemente
- 23: abtriebsseitige Ansteuerelemente
- 24: Ausgangsbereich
- 25: Tilgermassenträger
- 27: erste Führungsbahnen
- 29: Tilgermassen
- 30: Tilgersystem
- 31: zweite Führungsbahnen
- 32: Ausgangsposition
- 33: walzenförmiges Koppelelement
- 35: Tilgermassenteil
- 36: Tilgermassenteil
- 37: Tilgermassenteil
- 40: Bauraum
- 41: Vernietung
- 43: Aussparung
- 45: Dämpferelement
- 47: Dämpfungseinrichtung
- 48: Radialvorsprünge
- 49: Anschläge
- 50: Radialvorsprung Dämpferelement
- 52: Radialauswölbung Tilgermassenteil
- 54: Aussparungsabschnitt
- 56: Aussparungsaufweitung
- 58: Dämpferelementenarm
- 60: Querschnittsaufweitung
- 61: Axialverlängerung am Dämpferelementenarm
- 62: Profilierung
- 64: Stege
- 66: Nutungen
- 68: Gegenprofilierung
- 70: Nase
- 72: Axialsicherung
- 74: Axialsicherung

## Patentansprüche

1. Dämpfungsanordnung (2) für wenigstens eine an einem Tilgermassenträger (25) aufgenommene Tilgermasse (29) eines Tilgersystems (30) mit einer der wenigstens einen Tilgermasse (29) zugeordneten Dämpfungseinrichtung (47), die sowohl in Radialrichtung als auch in Umfangsrichtung eine Wirkung als Anschlag (49a bis 49c) für die jeweilige Tilgermasse (29) entfaltet, wobei die Dämpfungseinrichtung (47) über zumindest ein Dämpferelement (45) verfügt, das dem Tilgermassenträger (25) zumindest entlang eines Teils von dessen Umfangserstreckung zugeordnet ist, **dadurch gekennzeichnet, dass** das Dämpferelement (45) über eine erste Komponente (8) in Form eines Dämpferelemententrägers (6) verfügt, der am Tilgermassenträger (25) in einer hierfür vorgesehenen Aussparung (43) aufgenommen ist, und zur Aufnahme einer zweiten Komponente (9) in Form einer Dämpferelementenauflage (7) dient, die mit einem als Anschlag (49a bis 49c) für die jeweilige Tilgermasse (29) wirksamen Radialvorsprung (48, 50) in den im Tilgermassenträger (25) für die Bewegung der jeweiligen Tilgermasse (29) vorgesehenen Bauraum (40) ragt,
**dadurch gekennzeichnet dass**, das Dämpferelement (45) an seiner dem Tilgermassenträger (25) zugewandten Seite über wenigstens einen Dämpferelementenarm (58) verfügt, welcher in einen entsprechenden Aussparungsabschnitt (54) der Aussparung (43) des Tilgermassenträgers (25) eingreift.

2. Dämpfungsanordnung (2) nach Anspruch 1, **dadurch gekennzeichnet, dass** der wenigstens eine Dämpferelementenarm (58) an einem freien Ende eine Querschnittsaufweitung (60) aufweist, welche in eine entsprechende Aussparungsaufweitung (56) des Aussparungsabschnittes (54) eingreift.

3. Dämpfungsanordnung (2) nach Anspruch 1, **dadurch gekennzeichnet, dass** der wenigstens eine Dämpferelementenarm (58) zumindest im Wesentlichen in Richtung zu einer Zentralachse (10) des Tilgersystems (30) ausgerichtet ist, und in eine entsprechend ausgerichtete Ausnehmungsaufweitung (56) der Ausnehmung (43) eingreift.

4. Dämpfungsanordnung (2) nach Anspruch 2, **dadurch gekennzeichnet, dass** der wenigstens eine Dämpferelementenarm (58) an seinem in die Aussparungsaufweitung (56) des Aussparungsabschnittes (54) eingreifenden freien Ende eine Axialverlängerung (61) aufweist.

5. Dämpfungsanordnung (2) nach Anspruch 1, **dadurch gekennzeichnet, dass** der Dämpferelemententräger (6) als erste Komponente (8) des Dämpferelementes (45) aus einem formstabilen Werkstoff besteht, die Dämpferelementenauflage (7) als zweite Komponente (8) des Dämpferelementes (45) dagegen aus einem verformbaren Werkstoff.

6. Dämpfungsanordnung (2) nach Anspruch 5, **dadurch gekennzeichnet, dass** der Dämpferelemententräger (6) und damit die erste Komponente (8) des Dämpferelementes (45) aus einem Spritzguss mit einer ersten Werkstoffcharakteristik besteht, während die Dämpferelementenauflage (7) und damit die zweite Komponente (8) des Dämpferelementes (45) aus einem Spritzguss mit einer zweiten Werkstoffcharakteristik oder aus einem Elastomer besteht.

7. Dämpfungsanordnung (2) nach Anspruch 6, **dadurch gekennzeichnet, dass** der Dämpferelemententräger (6) an seiner der Dämpferelementenauflage (7) zugewandten Seite mit einer Profilierung (62) ausgebildet ist, mit welcher eine an der Dämpferelementenauflage (7) vorgesehene Gegenprofilierung (68) zur Herstellung einer formschlüssigen Wirkverbindung dient.

8. Dämpfungsanordnung (2) nach Anspruch 6 und 7, **dadurch gekennzeichnet, dass** die Gegenprofilierung (68) der Dämpferelementenauflage (7) durch Auftragen des Spritzgusses der zweiten Komponente (9) auf den Dämpferelemententräger (6) der ersten Komponente (8) entsteht, wobei eine Umschließung von Stegen (64) der Profilierung (62) des Dämpferelemententrägers (6) durch den Spritzguss auf zumindest dem überwiegenden Teil der Erstreckungslänge der Stege (64) der Profilierung (62) anzustreben ist.

9. Dämpfungsanordnung (2) nach Anspruch 1, **dadurch gekennzeichnet, dass** der Dämpferelemententräger (6) mittels Axialsicherungen (72, 74) in der Aussparung (43) des Tilgermassenträgers (25) gehalten ist.

10. Dämpfungsanordnung (2) nach Anspruch 9, **dadurch gekennzeichnet, dass** zumindest eine Axialsicherung (72) Teil des Dämpferelemententrägers (6) ist.

11. Dämpfungsanordnung (2) nach Anspruch 1, **dadurch gekennzeichnet, dass** das Dämpferelement (45) an seiner der jeweiligen Tilgermasse (29) zugewandten Seite in einem Umfangsbereich, welcher ungeachtet der jeweiligen Auslenkposition der Tilgermasse (29) unterbrechungsfrei von derselben zumindest überdeckt ist, über einen Radialvorsprung (50) verfügt, der in Zuordnung zu einer an einem Tilgermassenteil (37) der Tilgermasse (29) vorgesehenen Radialauswölbung (52) wirksam ist.

12. Dämpfungsanordnung (2) nach Anspruch 11, **dadurch gekennzeichnet, dass** der Radialvorsprung (50) am Dämpferelement (45) in Zuordnung zu der Radialauswölbung (52) am Tilgermassenteil (37) der Tilgermasse (29) als ein in Radialrichtung wirksamer Anschlag (49c) dient.

13. Dämpfungsanordnung (2) nach Anspruch 12, **dadurch gekennzeichnet, dass** das Dämpferelement (45) in seinen jeweiligen umfangsseitigen Endbereichen jeweils mit in Richtung zum Tilgermassenteil (37) überstehenden Radialvorsprüngen (48) ausgebildet ist, die jeweils in Zuordnung zu dem Tilgermassenteil (37) jeweils als in Umfangsrichtung wirksame Anschläge (49a, 49b) für die entsprechende Tilgermasse (29) dienen.

14. Dämpfungsanordnung (2) nach Anspruch 12 und 13, **dadurch gekennzeichnet, dass** die in Umfangsrichtung wirksamen Anschläge (49a, 49b) in Umfangsrichtung beidseits des in Radialrichtung wirksamen Anschlags (49c) vorgesehen sind.

## Claims

1. Damping arrangement (2) for at least one absorption mass (29), which is received on an absorption mass carrier (25), of an absorption system (30), having a damping device (47) which is assigned to the at least one absorption mass (29) and which acts as a stop (49a to 49c) for the respective absorption mass (29) both in the radial direction and in the circumferential direction, wherein the damping device (47) has at least one damper element (45) which is assigned to the absorption mass carrier (25) at least along part of its circumferential extent, **characterized in that** the damper element (45) has a first component (8) in the form of a damper element carrier (6) which is received on the absorption mass carrier (25) in a recess (43) provided for this purpose, and serves for receiving a second component (9) in the form of a damper element pad (7) which, by way of a radial projection (48, 50) which acts as a stop (49a to 49c) for the respective absorption mass (29), protrudes into the installation space (40) provided in the absorption mass carrier (25) for the movement of the respective absorption mass (29), **characterized in that** the damper element (45) has, on its side facing the absorption mass carrier (25), at least one damper element arm (58) which engages in a corresponding recess portion (54) of the recess (43) of the absorption mass carrier (25).

2. Damping arrangement (2) according to Claim 1, **characterized in that** the at least one damper element arm (58) has, at a free end, a cross-sectional widening (60) which engages in a corresponding recess widening (56) of the recess portion (54).

3. Damping arrangement (2) according to Claim 1, **characterized in that** the at least one damper element arm (58) is oriented at least substantially in the direction of a central axis (10) of the absorption system (30) and engages in a correspondingly oriented recess widening (56) of the recess (43).

4. Damping arrangement (2) according to Claim 2, **characterized in that** the at least one damper element arm (58) has an axial extension (61) at its free end which engages in the recess widening (56) of the recess portion (54).

5. Damping arrangement (2) according to Claim 1, **characterized in that** the damper element carrier (6), as first component (8) of the damper element (45), consists of a dimensionally stable material while, by contrast, the damper element pad (7), as second component (8) of the damper element (45), consists of a deformable material.

6. Damping arrangement (2) according to Claim 5, **characterized in that** the damper element carrier (6), and hence the first component (8) of the damper element (45), consist of an injection moulding having a first material characteristic, whereas the damper element pad (7), and hence the second component (8) of the damper element (45), consist of an injection moulding having a second material characteristic or of an elastomer.

7. Damping arrangement (2) according to Claim 6, **characterized in that** the damper element carrier (6) is formed, on its side facing the damper element pad (7), with a profiling (62) with which a counter-profiling (68) provided on the damper element pad (7) serves for producing a form-fitting operative connection.

8. Damping arrangement (2) according to Claims 6 and 7, **characterized in that** the counter-profiling (68) of the damper element pad (7) arises by applying the injection moulding of the second component (9) to the damper element carrier (6) of the first component (8), wherein enclosure of webs (64) of the profiling (62) of the damper element carrier (6) by the injection moulding over at least the most part of the length of extent of the webs (64) of the profiling (62) is to be sought.

9. Damping arrangement (2) according to Claim 1, **characterized in that** the damper element carrier (6) is held in the recess (43) of the absorption mass carrier (25) by way of axial securing means (72, 74) .

10. Damping arrangement (2) according to Claim 9, **characterized in that** at least one axial securing means (72) is part of the damper element carrier (6) .

11. Damping arrangement (2) according to Claim 1, **characterized in that** the damper element (45) has, on its side facing the respective absorption mass (29), a radial projection (50) in a circumferential region which, irrespective of the respective deflection position of the absorption mass (29), is at least covered by the latter without interruption, said radial projection acting in association with a radial bulge (52) provided on an absorption mass part (37) of the absorption mass (29).

12. Damping arrangement (2) according to Claim 11, **characterized in that** the radial projection (50) on the damper element (45), in association with the radial bulge (52) on the absorption mass part (37) of the absorption mass (29), serves as a stop (49c) which acts in the radial direction.

13. Damping arrangement (2) according to Claim 12, **characterized in that** the damper element (45) is formed, in its respective circumferential end regions, in each case with radial projections (48) which project in the direction of the absorption mass part (37) and which, in each case in association with the absorption mass part (37), serve in each case as stops (49a, 49b) for the corresponding absorption mass (29) which act in the circumferential direction.

14. Damping arrangement (2) according to Claims 12 and 13, **characterized in that** the stops (49a, 49b) acting in the circumferential direction are provided in the circumferential direction on both sides of the stop (49c) acting in the radial direction.

## Revendications

1. Agencement d'amortissement (2) pour au moins une masse d'amortissement (29), logée sur un support de masse d'amortissement (25), d'un système d'amortissement (30) comprenant un dispositif d'amortissement (47) associé à l'au moins une masse d'amortissement (29), qui fournit un effet de butée (49a à 49c) pour la masse d'amortissement respective (29) à la fois dans la direction radiale et dans la direction périphérique, le dispositif d'amortissement (47) disposant d'au moins un élément d'amortissement (45) qui est associé au support de masse d'amortissement (25) au moins le long d'une partie de son étendue périphérique, **caractérisé en ce que** l'élément d'amortissement (45) dispose d'un premier composant (8) sous la forme d'un support d'élément d'amortissement (6) qui est reçu sur le support de masse d'amortissement (25) dans un évidement prévu à cet effet (43), et qui sert à recevoir un deuxième composant (9) sous la forme d'un appui d'élément d'amortissement (7), qui pénètre avec une saillie radiale (48, 50), agissant en tant que butée (49a à 49c) pour la masse d'amortissement respective (29), dans l'espace structurel (40) prévu dans le support de masse d'amortissement (25) pour le déplacement de la masse amortissement respective (29),
**caractérisé en ce que**
l'élément d'amortissement (45) dispose, au niveau de son côté tourné vers le support de masse d'amortissement (25), d'au moins un bras d'élément d'amortissement (58) qui s'engage dans une portion d'évidement correspondante (54) de l'évidement (43) du support de masse d'amortissement (25).

2. Agencement d'amortissement (2) selon la revendication 1, **caractérisé en ce que** l'au moins un bras d'élément d'amortissement (58) présente, à une extrémité libre, un élargissement de section transversale (60) qui s'engage dans un élargissement d'évidement correspondant (56) de la portion d'évidement (54).

3. Agencement d'amortissement (2) selon la revendication 1, **caractérisé en ce que** l'au moins un bras d'élément d'amortissement (58) est orienté au moins essentiellement dans la direction d'un axe central (10) du système d'amortissement (30) et s'engage dans un élargissement d'évidement (56) de l'évidement (43) orienté de manière correspondante.

4. Agencement d'amortissement (2) selon la revendication 2, **caractérisé en ce que** l'au moins un bras d'élément d'amortissement (58) présente un prolongement axial (61) au niveau de son extrémité libre s'engageant dans l'élargissement d'évidement (56) de la portion d'évidement (54).

5. Agencement d'amortissement (2) selon la revendication 1, **caractérisé en ce que** le support d'élément d'amortissement (6), en tant que premier composant (8) de l'élément d'amortissement (45), se compose d'un matériau de forme stable, tandis que l'appui d'élément d'amortissement (7), en tant que deuxième composant (8) de l'élément d'amortissement (45), se compose d'un matériau déformable.

6. Agencement d'amortissement (2) selon la revendication 5, **caractérisé en ce que** le support d'élément d'amortissement (6) et par conséquent le premier composant (8) de l'élément d'amortissement (45) se composent d'un matériau de moulage par injection avec une première caractéristique de matériau tandis que l'appui d'élément d'amortissement (7) et par conséquent le deuxième composant (8) de l'élément d'amortissement (45) se composent d'un matériau de moulage par injection avec une deuxième caractéristique de matériau ou se composent d'un élastomère.

7. Agencement d'amortissement (2) selon la revendication 6, **caractérisé en ce que** le support d'élément d'amortissement (6) est réalisé, au niveau de son côté tourné vers l'appui d'élément d'amortissement (7), avec un profilage (62) avec lequel un profilage conjugué (68) prévu au niveau de l'appui d'élément d'amortissement (7) sert à établir une liaison fonctionnelle par engagement par correspondance de formes.

8. Agencement d'amortissement (2) selon les revendications 6 et 7, **caractérisé en ce que** le profilage conjugué (68) de l'appui d'élément d'amortissement (7) est réalisé par application du matériau de moulage par injection du deuxième composant (9) sur le support d'élément d'amortissement (6) du premier composant (8), des nervures (64) du profilage (62) du support d'élément d'amortissement (6) devant être enveloppées par le matériau de moulage par injection sur au moins la partie prépondérante de la longueur d'étendue des nervures (64) du profilage (62).

9. Agencement d'amortissement (2) selon la revendication 1, **caractérisé en ce que** le support d'élément d'amortissement (6) est retenu au moyen de fixations axiales (72, 74) dans l'évidement (43) du support de masse d'amortissement (25).

10. Agencement d'amortissement (2) selon la revendication 9, **caractérisé en ce qu'**au moins une fixation axiale (72) fait partie du support d'élément d'amortissement (6).

11. Agencement d'amortissement (2) selon la revendication 1, **caractérisé en ce que** l'élément d'amortissement (45), au niveau de son côté tourné vers la masse d'amortissement respective (29), dans une région périphérique qui est au moins recouverte sans interruption par la masse d'amortissement (29), indépendamment de la position de déviation respective de cette dernière, dispose d'une saillie radiale (50) qui coopère avec un creux radial (52) prévu au niveau d'une partie de masse d'amortissement (37) de la masse d'amortissement (29).

12. Agencement d'amortissement (2) selon la revendication 11, **caractérisé en ce que** la saillie radiale (50), au niveau de l'élément d'amortissement (45), en association avec le creux radial (52) au niveau de la partie de masse d'amortissement (37) de la masse d'amortissement (29), sert de butée (49c) agissant dans la direction radiale.

13. Agencement d'amortissement (2) selon la revendication 12, **caractérisé en ce que** l'élément d'amortissement (45), dans ses régions d'extrémité respectives du côté de la périphérie, est à chaque fois réalisé avec des saillies radiales (48) faisant saillie dans la direction de la partie de masse d'amortissement (37), lesquelles, respectivement en association avec la partie de masse d'amortissement (37), servent à chaque fois de butées (49a, 49b) agissant dans la direction périphérique pour la masse d'amortissement correspondante (29).

14. Agencement d'amortissement (2) selon les revendications 12 et 13, **caractérisé en ce que** les butées (49a, 49b) agissant dans la direction périphérique sont prévues dans la direction périphérique des deux côtés de la butée (49c) agissant dans la direction radiale.
